# EUROPÄISCHE PATENTSCHRIFT

(11) **EP 0 620 945 B1**
(45) Veröffentlichungstag und Bekanntmachung des Hinweises auf die Patenterteilung: **05.03.1997**
(21) Anmeldenummer: 93901720.8
(22) Anmeldetag: 24.12.1992
(51) Int. Cl.: G11B 23/087, G11B 23/04, G11B 23/30, G11B 15/04, G11B 15/08, G11B 23/023, G11B 27/11

(54) **KASSETTE MIT EINEM AUFZEICHNUNGSTRÄGER FÜR EIN AUFZEICHNUNGSGERÄT**
CASSETTE WITH A RECORDING MEDIUM FOR A RECORDING DEVICE
CASSETTE A SUPPORT D'ENREGISTREMENT POUR APPAREIL D'ENREGISTREMENT

(30) Priorität: 10.01.1992 DE 4200436; 10.01.1992 DE 4200435; 13.02.1992 DE 4204180; 06.03.1992 DE 4207211; 09.03.1992 DE 4207381; 22.07.1992 DE 4224116; 23.07.1992 DE 4224828
(43) Veröffentlichungstag der Anmeldung: 26.10.1994
(73) Patentinhaber: DEUTSCHE THOMSON-BRANDT GMBH, 78048 Villingen-Schwenningen (DE)
(72) Erfinder: UHDE, Dietmar, D-7744 Königsfeld (DE); SPILLE, Jens, D-3005 Hemmingen 1 (DE); WEISSER, Fritz, D-7742 St. Georgen (DE); PLATTE, Hans-Joachim, D-3005 Hemmingen 4 (DE); KAADEN, Jürgen, D-7730 VS-Villingen (DE); SCHRÖDER, Ernst, F., D-3000 Hannover 51 (DE); KEESEN, Heinz, Werner, D-3000 Hannover 1 (DE); SCHIERING, Rolf, D-3005 Hemmingen 1 (DE)
(86) Internationale Anmeldenummer: EP9202994
(87) Internationale Veröffentlichungsnummer: WO9314501

(56) Entgegenhaltungen:
- EP-A- 0 373 718
- EP-A- 0 440 493
- WO-A-89/10615
- WO-A-91/02355
- BE-A- 879 620
- DE-A- 3 812 747
- US-A- 4 057 839
- US-A- 4 995 029
- JP-A 62157391, Figuren 1-4 &PATENT ABSTRACTS OF JAPAN,Band 11,Nr.391, (P-649),12. Dezember 1987
- JP-A 4184781, Figur 1 &PATENT ABSTRACTS OF JAPAN,Band 16,Nr.506, (P-1440) 20. Oktober 1992
- JP-A-1251488 Figur 2 & PATENT ABSTRACTS OF JAPAN; Vol.13, No.590,(p-984) 26 December 1989
- PATENT ABSTRACTS OF JAPAN vol. 14, no. 494 (P-1123)26. Oktober 1990 & JP-A-22 01 789
- PATENT ABSTRACTS OF JAPAN vol. 14, no. 283 (P-1063)19. Juni 1990 & JP-A-20 83 879
- PATENT ABSTRACTS OF JAPAN vol. 12, no. 240 (P-727)8. Juli 1988 & JP-A-63 031 083
- PATENT ABSTRACTS OF JAPAN vol. 7, no. 216 (P-225)24. September 1983 & JP-A-58 111 163

## Beschreibung

Die Erfindung geht aus von einer Kassette gemäß dem Oberbegriff des Anspruchs 1. Eine derartige Kassette ist bekannt durch die DE-PS 29 43 409. Ein derartiges elektronisches Speicherbauelement in einer Kassette dient unter anderem zur Speicherung von kassettentypischen Kennwerten, die beim Aufnahme- oder Wiedergabevorgang bestimmte elektrische oder mechanische Funktionen des Gerätes steuern. Derartige Kennwerte können sich z.B. beziehen auf die Länge des Aufzeichnungsträgers, die Art der Magnetschicht, die Art der aufgezeichneten Signale, auf Vorverzerrungen der Signale und dgl. Der Speicher kann auch Daten über die aufgezeichneten Darbietungen, also ein Inhaltsverzeichnis enthalten. Mit dem Speicher verbundene Kontakte am Kassettengehäuse werden durch einen im Gerät befindlichen Kontaktfedersatz kontaktiert, der die Signale aus dem Speicher liest und einer Auswertschaltung zuführt. Der Speicher und die Kontakte müssen zusätzlich an dem Kassettengehäuse angebracht werden.

Der Erfindung liegt die Aufgabe zugrunde, eine einfache und billige Herstellbarkeit einer derartigen Kassette mit Speicher zu erzielen und teure Montagetechniken für die Anbringung von Speicher und Kontakten zu vermeiden. Diese Aufgabe wird durch die im Anspruch 1 angegebene Erfindung gelöst. Vorteilhafte Weiterbildungen der Erfindung sind in den Unteransprüchen angegeben.

Die JP-A-62157391 zeigt ein mit einem Speicher versehenes Blatt zur Aufbringung auf eine Kassette, das flexibel ausgebildet ist. Die Stromversorgung und der Datenaustausch erfolgen dabei über Spulen.

JP-A-2201789 zeigt eine zur Aufbringung auf eine Kassette geeignete integrierte Schaltung, die in einem Medium versiegelt ist und von außen zugängliche Kontakte aufweist.

Durch die WO-A-9102355 ist es bekannt, einen Speicher in die Aufnahmesperröffnung am Gehäuse einer Kassette einzusetzen, die in einer neuen Kassette mit einem ausbrechbaren Teil verschlossen ist.

Bei der Erfindung wird ein auf einem anderen Gebiet bereits gebräuchlicher und als Massenartikel in Millionenstückzahl hergestellter und entsprechend billiger Gegenstand zu einem neuen Zweck angewendet. Vorzugsweise wird eine Chipkarte angewendet, wie sie heute bei Telefonkarten, Scheckkarten oder sonstigen Karten mit gespeichertem Guthaben bekannt ist. Dabei kann eine bekannte und bewährte Fertigungstechnologie zur Realisierung der erfindungsgemäßen Kassette mit einem Speicher ausgenutzt werden. Der erfindungsgemäße Deckel ermöglicht auch ohne großen Mehraufwand, das bei Kassetten gebräuchliche transparente Sichtfenster zur Beurteilung des Bandstandes zu realisieren. Vorzugsweise ist in den Deckel zusätzlich eine transparente Markierstelle eingebaut, die mit einer Lichtschranke im Gerät zusammenwirkt und eine Aufnahmesperre bildet. Die Aufnahme wird dann nur freigegeben, wenn die Markierstelle transparent ist und das Licht von der Lichtquelle zur Fotozelle der Lichtschranke gelangt. Durch Überkleben oder Schwärzen der an sich transparenten Markierstelle kann die Aufnahmesperre im Sinne eines Löschschutzes aktiviert werden.

Die Kontakte liegen vorzugsweise an der oberen vorderen Kante der Kassette, an der der Zugriff zu dem Aufzeichnungsträger durch Einführung eines Abtastkopfes oder durch Ausfädeln des Bandes erfolgt. Diese Lage der Kontakte hat den Vorteil, daß die zugänglichen, nicht geschützten Kontakte beim Einlegen der Kassette von Hand nicht so leicht berührt und verschmutzt werden. Das beruht darauf, daß die Kassette in der Regel von der Rückseite her erfaßt und von der Vorderseite, an der der Zugriff zum Aufzeichnungsträger erfolgt, eingeschoben wird. Ein weiterer Vorteil besteht darin, daß durch Anordnung eines Kontaktfedersatzes im Gerät unmittelbar am Anfang des Aufnahmeschachtes für die Kassette der Speicher schon von Beginn des Einschiebvorgangs gelesen werden kann und somit die Kennwerte schnell zur Verfügung stehen.

Vorzugsweise sind die Kontakte an der Oberseite des Kassettengehäuses angeordnet, d.h, auf der Fläche, die dem Benutzer zur Beschriftung vorgegeben ist. Das hat u.a. den Vorteil, daß z.B. ein vom Aufzeichnungsgerät unabhängiges Lesegerät für den Speicher von oben auf die Kontakte aufgesetzt werden kann, ohne daß die Kassette dazu umgedreht werden muß. Ein solches Lesegerät ist beschrieben in der älteren Patentanmeldung P 41 35 371. Vorzugsweise ist auch die genannte als Aufnahmesperre dienende Markierstelle an der Oberseite angeordnet. Dann kann der Benutzer beim Blick auf die Oberseite der Kassette, auf der sich auch das Beschriftungsfeld oder Etikett befindet, gleichzeitig mit bloßen Auge erkennen, ob die Aufnahmesperre aktiviert oder aufgehoben ist.

Der erfindungsgemäße Deckel kann somit eine Vielzahl von Funktionen erfüllen. Er dient dabei insbesondere als reine Abedeckung des Kassettengehäuses an der Oberseite, zur Aufnahme des Speichers und der Kontakte, bildet das Sichtfenster für die Betrachtung des Bandstandes, dient als Beschriftung- oder Reklamefläche und enthält die transparente Markierstelle für einen Aufnahmeschutz. Die erfindungsgemäße Kassette ist insbesondere als neuartige Kassette für eine digitale Videoaufzeichnung geeignet.

Die Erfindung wird im folgenden anhand der Zeichnung erläutert. Darin zeigen
- Fig. 1: in Draufsicht eine erfindungsgemäße Kassette,
- Fig. 2: dieselbe Kassette ohne Aufdruck und
- Fig. 3: dieselbe Kassette mit einer vergrößerten Darstellung der Kontakte und des Speichers.
- Fig 4: eine erfindungsgemäße ausgebildete Kassette und
- Fig. 5: die Kassette mit der optoelektronischen Auswertung im Recorder.

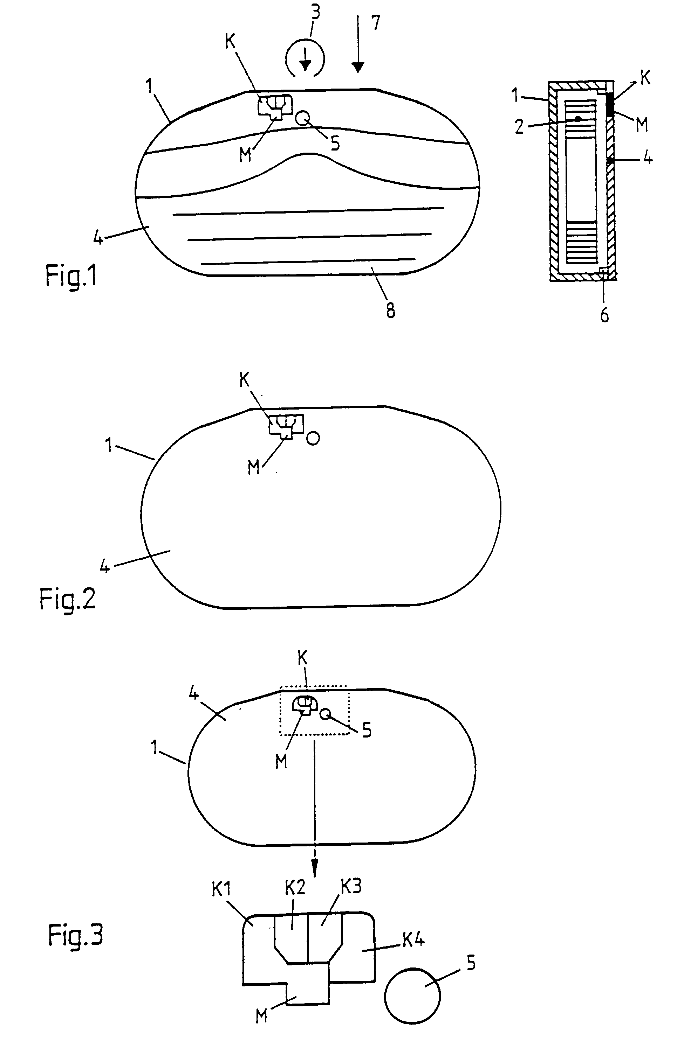

Fig. 1 zeigt das Kassettengehäuse 1, in dem zwei das Magnetband tragende Bandspulen 2 drehbar gelagert sind. Der Zugriff zu dem Aufzeichnungsträger erfolgt von der Vorderseite 7 der dargestellten Kassette, entweder durch Eingriff von symbolisch dargestellten Köpfen 3 oder durch Ausfädeln des Bandes und Herumlegen um eine Kopftrommel. Beim manuellen Einlegen der Kassette in das Gerät wird die Kassette normalerweise im hinteren Bereich 8 von Hand erfaßt. Das Kassettengehäuse 1 ist an der Oberseite mit der Oberfläche 4 abgeschlossen. Die Oberfläche 4 ist als Chipkarte mit einem integrierten Halbleiter-Speicher M und diesem zugeordneten, von außen zugänglichen offenen Kontakten K ausgebildet. Der Dekkel 4 ist aus einer handelsüblichen Chipkarte ausgestanzt. Beim Einlegen der Kassette in das Aufzeichnungsgerät gelangt ein im Gerät angeordneter Kontaktfedersatz in Kontakt mit den Kontakten K, wodurch die in dem Speicher M gespeicherten Kennwerte und Daten gelesen und einer Auswertschaltung im Gerät zugeführt werden.

Die Oberfläche 4 ist zusätzlich mit der transparenten Markierstelle 5 versehen. Im Gerät ist eine Lichtschranke angeordnet, die mit dieser Markierstelle 5 zusammenarbeitet. Die Markierstelle 5 ist normalerweise transparent, so daß das Licht der Lichtquelle der Lichtschranke zu der Fotozelle gelangt. Dieses ist ein Kriterium für die Freigabe der Aufnahme, die Aufnahmesperre ist dann also aufgehoben. Zur Aktivierung der Aufnahmesperre wird die transparente Markierstelle 5 lichtundurchlässig oder weniger transparent gemacht, z.B. durch Abkleben mit einer Folie oder Schwärzung mit einem Stift. Das Licht der Lichtquelle gelangt dann nicht mehr oder nur in geringer Intensität auf die Fotozelle, wodurch eine elektrische oder mechanische Aufnahmesperre im Gerät aktiviert wird. Durch die Lage der Kontakte K des Speichers M und der Markierstelle 5 an der vorderen oberen Seite des Kassettengehäuses 1 können diese Teile beim Einlegen der Kassette gleichzeitig betrachtet werden. Dabei wird gleichzeitig weitestgehend verhindert, daß diese Teile von Hand berührt werden. Der Kontaktfedersatz im Gerät ist vorzugsweise vorn oberhalb des Kassettenaufnahmefaches an dessen Anfang angeordnet. Dadurch gelangt der Kontaktfedersatz bereits beim Beginn des Einschiebens der Kassette in Kontakt mit den Kontakten K, so daß die in dem Speicher M enthaltenden Kennwerte schon früh beim Einschiebvorgang gelesen und der Auswertschaltung zugeführt werden.

Fig. 2 zeigt das Kassettengehäuse 1 gemäß Fig. 1 lediglich ohne einen Labelaufdruck.

Fig. 3 zeigt wiederum eine Kassette gemäß Fig. 1, 2, wobei die Kontakte K, der Speicher M und Markierstelle 5 vergrößert gezeichnet sind. Dargestellt sind insgesamt vier Kontakte K1 - K4, die mit den Anschlüssen des Speichers M verbunden sind. Die Kontakte K1 - K4 liegen vorzugsweise in einer Ebene mit der Ebene der Oberfläche 4, um eine einwandfreie Kontaktierung durch den Kontaktfedersatz im Gerät zu ermöglichen.

Die Oberfläche 4 kann noch mit einer umlaufenden Rippe 6 versehen sein, die zur Stabilisierung der Oberfläche 4, als Anschlag und als zusätzliche Klebefläche zwischen der Oberfläche 4 und Kassettengehäuse 1 dient. Die Mittel, die üblicherweise im Gerät vorgesehen sind und die eingelegte Kassette nach unten auf das Gerätechassis drücken, können gleichzeitig den Kontaktfedersatz zur Kontaktierung der Kontakte K enthalten. Der Kontaktfedersatz ist vorzugsweise so ausgebildet und angeordnet, daß er auch im endgültig eingelegten Zustand der Kassette in das Gerät die Kontakte K kontaktiert.

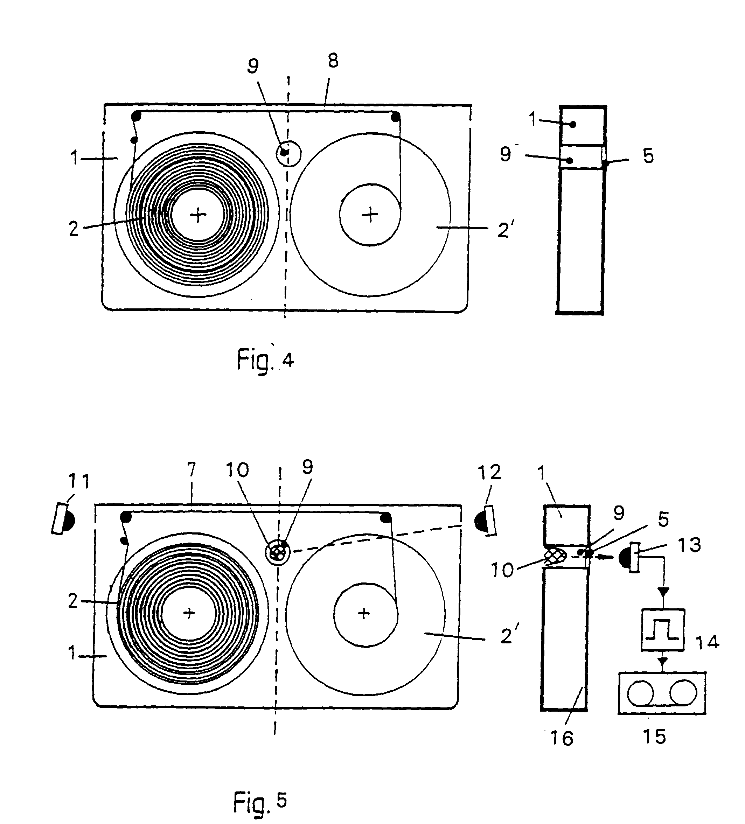

In Fig. 4 sind in dem Kassettengehäuse 1 zwei Bandspulen 2,2' drehbar gelagert, auf denen das Magnetband 8 aufgewickelt ist. Das Gehäuse 1 enthält eine Öffnung(Loch) 9, die am Ende eine Markierstelle 5 bildet. Durch die Öffnung 9 wird im Recorder Licht oder eine Lichtquelle eingeführt. Damit wird die Markierstelle 5 im Recorder wie mit einer Lichtschranke abgefragt. Wenn die Markierstelle 5 transparent ist, gelangt der Lichtstrahl durch die Öffnung 9 und die Markierstelle 5 auf eine Fotozelle und gibt die Aufnahme frei. Wenn eine Aufnahmesperre zum Zwecke des Löschchutzes gewünscht ist, wird die Markierstelle 5 nicht transparent, also lichtundurchlässig oder weniger lichtdurchlässig gemacht, so daß der Lichtstrahl der Lichtschranke die Fotozelle nicht mehr oder nicht in ausreichender Intensität erreicht. Durch die Auswertelektronik wird dann eine Aufnahmesperre aktiviert, die als Löschschutz gegen unbeabsichtigtes Löschen einer bereits vorhandenen Aufnahme wirkt. Die Umwandlung der Markierstelle 5 von dem transparenten in den nichttransparenten Zustand kann z.B. durch einen Aufkleber oder weniger durch Schwärzung mit einem Stift erfolgen. Der Benutzer kann durch Betrachten der Markierstelle 5 jederzeit sofort mit dem bloßen Auge erkennen, ob die Aufnahmesperre aktiviert oder aufgehoben ist.

Fig. 5 zeigt eine Kassette 1, wie sie bei VHS verwendet wird. In das Loch 9 des Gehäuses 1 greift von unten die am Recorderchassis angeordnete Lichtquelle 10 ein. Die Lichtquelle 10 wirkt über beim Abspielbetrieb geöffnete Löcher im Kassettengehäuse 1 auf zwei Fotozellen 11, 12 und bewirkt zusammen mit dem transparenten Bandabschnitt am Beginn und am Ende des Bandes jeweils die Endabschaltung beim Vorlauf oder Rücklauf. Das ohnehin vorhandene Loch 9 ist jetzt wie in Fig. 4 zusätzlich als Markierstelle 5 ausgebildet. Im Gegensatz zu bekannten Kassetten ist das Loch 9 an dem der Lichtquelle 10 abgewandten Ende an der Oberseite der Kassette 1 nicht verschlossen, sondern weist eine transparente Abdekkung auf, die, wie in Fig. 1 beschrieben, zur Aktivierung der Aufnahmesperre lichtundurchlässig oder weniger lichtdurchlässig gemacht werden kann.

Wenn eine Aufnahmesperre nicht gewünscht ist, gelangt der Lichtstrahl von der Lichtquelle 10 über die transparente Markierstelle 5 auf die Fotozelle 13, die z.B. bei einer VHS-Kassette oberhalb der Kassette angeordnet ist. Diese steuert die Aufnahmesperre 14 für die Aufzeichnungseinheit 15 so, daß eine Aufnahme möglich ist. Zur Aktivierung der Aufnahmesperre wird die Markierstelle 5 nicht oder weniger transparent gemacht, so daß kein Lichtstrahl oder nur Restlicht geringer Intensität auf die Fotozelle 13 gelangt. Die Aufnahmesperre 14 wirkt dann auf die Aufzeichnungseinheit 15 so ein, daß eine Aufnahme mechanisch oder elektrisch verhindert ist. Bei vorbespielten, käuflichen oder zu leihenden Kassetten, bei denen ein versehentliches Löschen grundsätzlich verhindert werden soll, kann die Markierstelle 5 grundsätzlich verschlossen sein, indem z.B. die Wand 16 des Gehäuses 1 an der Markierstelle 5 nicht unterbrochen, sondern durchgehend ist. Dann kann eine transparente Markierstelle 5, die Voraussetzung für die Freigabe der Aufnahme ist, vom Benutzer grundsätzlich nicht zerstörungsfrei hergestellt werden.

Es ist auch möglich, die obere Abdeckplatte des Kassettengehäuses 1 ganz oder im wesentlichen ganz transparent auszubilden. Eine teilweise transparente Ausbildung ist ohnehin in der Praxis notwendig, um ein Sichtfenster zum Erkennen der Standes der Bandwickel zu bilden. Die obere Abdeckplatte bildet dann mit ihrem transparenten Bereich einerseits das Sichtfenster und andererseits die Markierstelle 5. Zusätzlich kann der Deckel noch eine Fläche zum Aufkleben eines Etikettes aufweisen.

## Patentansprüche

1. Kassette mit einem Aufzeichnungsträger für ein Aufzeichnungsgerät, bei der an einer Oberfläche des Kassettengehäuses (1) ein Halbleiterspeicher (M) mit vom Gerät elektrisch kontaktierbaren Kontakten für Kennwerte der Kassette und/oder andere Daten angeordnet ist, **dadurch gekennzeichnet,** daß der Speicher (M) in einem Gehäuseteil integriert ist, indem ein ausgestantztes Speicher-Chipkartenteil eine Gehäusewand des Kassettengehäuses bildet.

2. Kassette nach Anspruch 1, **dadurch gekennzeichnet,** daß die Kontakte (K) nebeneinander nahe der oder an der vorderen oberen Kante des Kassettengehäuses (1) liegen, an der im Gerät der Zugriff zu dem Aufzeichnungsträger erfolgt.

3. Kassette nach Anspruch 1, **dadurch gekennzeichnet**, daß die Oberfläche (4) eine Markierstelle (5) mit veränderbarer Lichtdurchlässigkeit aufweist, die zusammen mit einer im Gerät vorhandenen Lichtschranke als wahlweise entsprechend der jeweiligen Lichtdurchlässigkeit aktivierbare oder aufhebbare Aufnahmesperre dient.

4. Kassette nach Anspruch 3, **dadurch gekennzeichnet**, daß Mittel vorgesehen sind, mit denen eine transparent hergestellte Markierstelle (5) verschließbar oder nicht bzw. weniger transparent machbar ist.

5. Kassette nach Anspruch 1, **dadurch gekennzeichnet**, daß an dem Kassettengehäuse (1) Mittel vorgesehen sind, die eine zerstörerisch hohe statische Aufladung der Kontakte (K) des Speichers (M) an der Kassette verhindern.

6. Aufzeichnungsgerät mit einer Kassette nach Anspruch 1, **dadurch gekennzeichnet**, daß im Gerät ein Kontaktfedersatz vorgesehen ist, der die Kontakte (K) der Kassette bei oder nach deren Einlegen kontaktiert und an eine Auswertschaltung angeschlossen ist.

## Claims

1. Cassette including a recording medium for a recording apparatus in which a memory for characteristic values of the cassette and/or other items of data, which can be electrically contacted by the apparatus, is arranged on the cassette housing and a semiconductor memory (M) having contacts (K) that are externally accessible is arranged on a surface (4) of the cassette housing (1), characterised in that, the memory (M) is integrated in a housing part in which a punched-out chip card part forms a housing wall of the cassette housing.

2. Cassette in accordance with claim 1, characterised in that, the contacts (K) are located adjacent to each other near to the, or at the, front upper edge of the cassette housing (1), at which the access to the recording medium in the apparatus takes place.

3. Cassette in accordance with claim 1, characterised in that, the surface (4) has a marking position (5) having variable light transmissivity which can, together with a light barrier that is present in the apparatus, selectively serve for activating or lifting a bar on recording in accordance with the current light transmissivity.

4. Cassette in accordance with claim 3, characterised in that, means are provided with which a marking position (5) that was transparent when manufactured can be closed or can be made non-transparent or less transparent.

5. Cassette in accordance with claim 1, characterised in that, means are provided on the cassette housing (1) which prevent a destructively high static charging of the contacts (K) of the memory (M) in the cassette.

6. Recording apparatus for a cassette in accordance with claim 1, characterised in that, there is provided in the apparatus a spring contact set which contacts the contacts (K) of the cassette during or after its insertion and which is connected to an evaluating circuit.

## Revendications

1. Cassette à support d'enregistrement pour appareil d'enregistrement, dans laquelle est disposée sur une surface du boîtier (1) de la cassette une mémoire (M) à semiconducteur munie de contacts pouvant être mis en contact avec l'appareil contenant les caractéristiques de la cassette et/ou d'autres données, caractérisée par le fait que la mémoire (M) est intégrée dans une partie du boîtier, si bien qu'une partie de carte à puce découpée forme une paroi du boîtier de la cassette.

2. Cassette selon la revendication 1, caractérisée par le fait que les contacts (K) sont disposés les uns à côté des autres à proximité ou au niveau du bord supérieur du boîtier (1) de la cassette sur lequel s'effectue l'accès au support d'enregistrement dans l'appareil.

3. Cassette selon la revendication 1, caractérisée par le fait que la surface (4) présente un point de repérage (5) ayant une transparence à la lumière variable, lequel, combiné avec une barrière photoélectrique présente dans l'appareil, sert au choix à activer ou à supprimer un dispositif de blocage de l'enregistrement en fonction des différentes transparences à la lumière.

4. Cassette selon la revendication 3, caractérisée par le fait que des moyens sont prévus grâce auxquels il est possible de fermer un point de repérage (5) fabriqué transparent ou de le rendre non ou moins transparent.

5. Cassette selon la revendication 1, caractérisée par le fait que des moyens sont prévus sur le boîtier (1) de la cassette, lesquels empêchent une forte charge statique destructrice des contacts (K) de la mémoire (M) sur la cassette.

6. Appareil d'enregistrement ayant une cassette selon la revendication 1, caractérisé par le fait qu'un jeu de ressorts de contact est prévu dans l'appareil, lequel entre en contact avec les contacts (K) de la cassette au moment ou après son introduction et est raccordé à un circuit d'évaluation.
